(19) **Europäisches Patentamt**

**European Patent Office**

**Office européen des brevets**

(11) **EP 0 606 289 B1**

(12) **EUROPEAN PATENT SPECIFICATION**

(45) Date of publication and mention
of the grant of the patent:
**28.05.1997 Bulletin 1997/22**

(51) Int Cl.[6]: **C08F 10/02**, C08F 2/06,
C08F 4/642, C08F 4/655

(21) Application number: **92920135.8**

(22) Date of filing: **25.09.1992**

(86) International application number:
**PCT/CA92/00418**

(87) International publication number:
**WO 93/07187 (15.04.1993 Gazette 1993/10)**

(54) **Catalyst for ethylene polymerization at high temperatures**

Katalysator für Ethylenpolymerisation bei Hochtemperaturen

Catalyseur pour la polymèrisation de l'éthylene à haute température

(84) Designated Contracting States:
**BE CH DE FR GB IT LI NL**

(30) Priority: **03.10.1991 GB 9121033**

(43) Date of publication of application:
**20.07.1994 Bulletin 1994/29**

(73) Proprietor: **Nova Chemicals (International) S.A.**
**1752 Villars-sur-Glane 1 (CH)**

(72) Inventor: **ZBORIL, Vaclav, George**
**Kingston, Ontario K7M 5T7 (CA)**

(74) Representative: **Harrison, David Christopher et al**
**MEWBURN ELLIS**
**York House**
**23 Kingsway**
**London WC2B 6HP (GB)**

(56) References cited:
**EP-A- 0 280 353**          **US-A- 4 250 288**
**US-A- 4 342 855**          **US-A- 4 681 924**

## Description

The present invention relates to a process and catalyst for the preparation of polymers of ethylene, especially homopolymers of ethylene and copolymers of ethylene and higher alpha-olefins. In particular, the invention relates to a solution polymerization process for the preparation of such polymers in which the alpha-olefin monomer is polymerized in the presence of a coordination catalyst capable of being used at high polymerization temperatures, especially temperatures above 150°C.

Polymers of ethylene, for example, homopolymers of ethylene and copolymers of ethylene and higher alpha-olefins, are used in large volumes for a wide variety of end-uses, for example, in the form of film, fibres, moulded or thermoformed articles, pipe coatings and the like.

There are two types of processes for the manufacture of polyethylene that involve the polymerization of monomers in an inert liquid medium in the presence of a coordination catalyst viz. those which operate at temperatures below the melting or solubilization temperature of the polymer and those which operate at temperatures above the melting or solubilization temperature of the polymer. The latter are referred to as "solution" processes, an example of which is described in CA-A-660,869 of A.W. Anderson, E.L. Fallwell and J.M. Bruce, which issued 1963 April 9. In a solution process, the process is operated so that both the monomer and polymer are soluble in the reaction medium. Accurate control over the degree of polymerization, and hence the molecular weight of the polymer obtained, may be achieved by control of the reaction temperature. In solution polymerization processes, it is advantageous to operate the process at very high temperatures e.g. >250°C, and to use the heat of polymerization to flash off solvent from the polymer solution obtained.

While steps may be taken to remove catalyst from the polymer subsequent to the polymerization step in the process, it is preferred that a solution polymerization process be operated without catalyst removal steps. Thus, catalyst will remain in the polymer. Such catalyst, which may be referred to as "catalyst residue", may contribute to the colour of the polymer obtained and to degradation of the polymer during or subsequent to processing of the polymer. The amount of catalyst residue is related, at least in part, to the overall activity of the catalyst employed in the polymerization step of the process as the higher the overall activity of the catalyst the less catalyst that is, in general, required to effect polymerization at an acceptable rate. Catalysts of relatively high overall activity are therefore preferred in solution polymerization processes.

Two important factors in determining the overall activity of a catalyst are the instantaneous activity of the catalyst and the stability of the catalyst under the operating conditions, especially at the operating temperature. Many catalysts that are stated to be very active in low temperature polymerization processes also exhibit high instantaneous activity at the higher temperatures used in solution processes, but tend to decompose within a very short time in a solution process, with the result that the overall activity is disappointingly low. Such catalysts are of no commercial interest for solution processes. Other catalysts may exhibit acceptable overall activity at the higher temperatures of a solution process but show tendencies to yield polymers of broad molecular weight distribution or of too low a molecular weight to be commercially useful for the manufacture of a wide range of useful products. Yet other catalysts exhibit high overall activity and yield useful polymers but contain vanadium which is believed to be a contributor to colour and degradation in the polymer. Thus, the requirements for and the performance of a catalyst in a solution polymerization process are quite different from those of a catalyst in a low temperature polymerization process, as will be understood by those skilled in the art.

The preparation of polymers of ethylene is described in WO-A-91/17193 of D.J. Gillis, M.C. Hughson and V.G. Zboril, published 1991 November 14, and in the patent applications referred to therein.

US-A-4 250 288 of K. Lowery et al, which issued 1981 February 10, describes a process for the polymerization of alpha-olefins at a temperature of at least 185°C in which the catalyst is formed from a compound of a transition metal, the product formed by reacting an organomagnesium compound with an active non-metallic halide and a hydrocarbyl aluminum compound.

EP-A-280353 discloses catalyst systems for solution polymerization which have different component ratios.

A high temperature solution process for the preparation of homopolymers of ethylene and copolymers of ethylene and higher alpha-olefins in which the catalyst is a coordination catalyst prepared in-line from both titanium and magnesium, residues from which may be left in the polymer, has now been found.

Accordingly, the present invention provides a solution process for the preparation of high molecular weight polymers of alpha-olefins selected from the group consisting of homopolymers of ethylene and copolymers of ethylene and $C_3$-$C_{12}$ higher alpha-olefins, said process comprising feeding monomer selected from the group consisting of ethylene and mixtures of ethylene and at least one $C_3$-$C_{12}$ higher alpha-olefin, a coordination catalyst and inert hydrocarbon solvent to a reactor, polymerizing said monomer at a temperature in the range of 105-320°C and recovering the polymer so obtained, characterized in that said coordination catalyst is formed using Procedure A or Procedure B by in-line mixing of components (i)-(v), as follows:

(i) a mixture of $MgR^1_2$ and $AlR^2_3$ in which each $R^1$ and $R^2$ are the same or different and are independently selected from alkyl groups having 1-10 carbon atoms;

(ii) a reactive chloride component;

(iii) a titanium compound selected from titanium tetrachloride or titanium tetrabromide;

(iv) $AlR^3_3$ in which each $R^3$ is an alkyl group having 1-10 carbon atoms; and

(v) an alcohol;

in which: Procedure A comprises admixing components (i) and (ii) and subsequently admixing the resultant composition with (iii) to form a first catalyst component, separately admixing component (iv) with component (v) to form a second catalyst component, and after a period of about 30-500 seconds combining the first and second catalyst components; Procedure B comprises admixing components (ii) and (iii) and adding component (i) to the resultant mixture to form a first catalyst component, and separately admixing component (iv) with component (v) to form a second catalyst component, and subsequently admixing the first and second components;

or by Procedure C using components (vi)-(xi), as follows:

(vi) $MgR^1_2$ as defined above;

(vii) a reactive chloride compound;

(viii) $AlR^4_zCl_{3-z}$ in which etch $R^4$ is an alkyl group having 1-10 carbon atoms and z is 0-3;

(ix) a titanium compound as defined above;

(x) an alcohol; and

(xi) $AlR^2_3$ as defined above;

in which Procedure C comprises admixing component (vi) with a mixture formed from components (vii) and (viii), admixing component (ix) with the resultant admixture to form a first catalyst component, separately admixing component (x) and component (xi) to form a second catalyst component and then combining the first and second catalyst components;

the forming of the first and second catalyst components and the admixing thereof being carried out in-line; said coordination catalyst having an atomic ratio of Mg:Al in the range of 1:0.05 to 1:0.4 in the first component, a ratio of Mg:Ti in the range of 2:1 to 50:1, a ratio of Al in component (iv) or (xi) to Ti in the range 0.5:1 to 10:1, a ratio of Al in component (iv) or (xi) to alcohol in component (v) or (x) in the range of 1:0.05 to 1:1.5, and a ratio of (chloride in component (ii) or (vii) plus 0.25 times chloride or bromide in component (iii) or (ix)) to Mg in the range of 1:1 to 3:1.

In a preferred embodiment of the process, the forming of the first and second catalyst components and the admixing thereof is carried out in-line at a temperature of less than 30°C.

The present invention is directed to a process for the preparation of high molecular weight polymers of alpha-olefins, such polymers being intended for fabrication into articles by extrusion, injection moulding, thermoforming, rotational moulding and the like. In particular, the polymers of alpha-olefins are homopolymers of ethylene and copolymers of ethylene and higher alpha-olefins i.e. alpha-olefins of the ethylene series, especially such higher alpha-olefins having 3 to 12 carbon atoms i.e. $C_3$-$C_{12}$ higher alpha-olefins, examples of which are 1-butene, 1-hexene and 1-octene. The preferred higher alpha-olefins have 4-10 carbon atoms. In addition, cyclic endomethylenic dienes may be fed to the process with the ethylene or mixtures of ethylene and $C_3$-$C_{12}$ higher alpha-olefin. Such polymers are known.

In the process of the present invention, monomer, a coordination catalyst and inert hydrocarbon solvent, and optionally hydrogen, are fed to a reactor. The monomer may be ethylene or mixtures of ethylene and at least one $C_3$-$C_{12}$ higher alpha-olefin, preferably ethylene or mixtures of ethylene and at least one $C_4$-$C_{10}$ higher alpha-olefin; it will be understood that the alpha-olefins are hydrocarbons.

The coordination catalyst may be formed from components (i)-(v), as follows:

(i) a mixture of $MgR^1_2$ and $AlR^2_3$ in which each $R^1$ and $R^2$ are the same or different and are independently selected from alkyl groups having 1-10 carbon atoms;

(ii) a reactive chloride component;

(iii) a titanium compound selected from titanium tetrachloride or titanium tetrabromide;

(iv) $AlR^3_3$ in which each $R^3$ is an alkyl group having 1-10 carbon atoms; and

(v) an alcohol.

In component (i), the alkyl group is preferably methyl, ethyl, propyl, butyl or iso-butyl. It is to be understood that the two alkyl groups of the magnesium compound may be the same or different, as stated above; for example a preferred component (i) is methyl ethyl magnesium. Similarly, the alkyl groups of the aluminum compound may be the same or different.

In component (ii) and (vii), the reactive chloride has a labile chlorine atom; as used herein "reactive chloride" means a chlorine-containing compound having a chlorine atom that is capable of being exchanged with an alkyl group of a compound of the formula $MgR_2$, where R is the alkyl group, in an inert organic solvent at a temperature of 30°C in a period of time that is less than one minute. Examples of the reactive chloride include HCl, t-butyl chloride and benzyl chloride.

In component (iii), the preferred titanium compound is titanium tetrachloride.

In component (iv), the alkyl group is preferably methyl, ethyl, propyl, n-butyl or iso-butyl.

In component (v), the alcohol is preferably an aliphatic alcohol having from 1-20 carbon atoms, especially 1-16 carbon atoms and preferably 2-12 carbon atoms. The alcohol may be a linear or branched aliphatic alcohol.

The catalyst may be prepared using Procedure A or Procedure B. Component (i) of Procedure A or B may be a pre-mixed solution of the $MgR^1_2$ and $AlR^2_3$, or the $MgR^1_2$ and $AlR^2_3$ may be mixed in-line, conveniently at ambient temperature to form component (i), which is believed to be stable in storage. Procedure A comprises admixing components (i) and (ii) in-line, conveniently at ambient temperature, for about 20-300 seconds and then admixing the resultant composition with component (iii) to form a first catalyst component; component (iii) is conveniently also admixed in at ambient temperature, for 5-100 seconds. In a separate step, component (iv) is admixed with component (v), either by pre-mixing or in-line using a hold-up time of at least about 60-180 seconds, conveniently at ambient temperature, to form a second catalyst component, which is believed to be stable in storage. The first and second catalyst components are combined, conveniently at ambient temperature, and admixed for 2-60 seconds before being fed directly to the reactor.

Procedure B comprises pre-mixing components (ii) and (iii), conveniently at ambient temperature. The resultant admixture, which is believed to be stable in storage, is then mixed with component (i), described above, using a hold-up time of 20-300 seconds, to form the first catalyst component. In a separate step, component (iv) is admixed with component (v) in the manner used in Procedure A, to form the second catalyst component. Subsequently the first and second components are admixed, conveniently at ambient temperature, using a hold-up time of 2-60 seconds before being fed to the reactor.

In an alternate procedure, the catalyst is prepared in-line from components (vi)-(xi) using procedure C, as follows:

(vi) $MgR^1_2$ as defined above;
(vii) a reactive chloride compound, as defined above;
(viii) $AlR^4_zCl_{3-z}$ in which each $R^4$ is an alkyl group having 1-10 carbon atoms and z is 0-3;
(ix) a titanium compound as defined above;
(x) an alcohol; and
(xi) $AlR^2_3$ as defined above. Procedure C comprises admixing components (vii) and (viii) in-line,

conveniently at ambient temperature, and then admixing the resultant composition with component (vi). The resultant admixture is admixed in-line, conveniently at ambient temperature, with component (ix) to form the first catalyst component. The second catalyst component is formed by admixing in-line, conveniently at ambient temperature, components (x) and (xi). The first and second catalyst components are then combined, conveniently at ambient temperature, and admixed before being fed to the reactor.

The coordination catalyst is prepared such that:

1. the atomic ratio of Mg:Al in the first component is in the range of 1:0.05 to 1:0.4, especially 1:0.1 to 1:0.4, preferably 1:0.15 to 1:0.25;
2. the ratio of Mg:Ti is in the range of 2:1 to 50:1, preferably 2:1 to 10:1, especially 4:1 to 8:1, and most preferably about 5:1;
3. the ratio of Al in component (iv) or (xi) to Ti is in the range 0.5:1 to 10:1, especially 1:1 to 7:1;
4. the ratio of Al in component (iv) or (xi) to alcohol in component (v) or (x) is in the range of 1:0.05 to 1:1.5, especially 1:0,05 to 1:1.1, preferably about 1:1; and
5. a ratio of (chloride in component (ii) or (vii) plus 0.25 times chloride in component (iii) or (ix)) to Mg in the range of 1:1 to 3:1, especially in the range 1.8:1 to 2.8:1 and preferably in the range 1.9:1 to 2.6:1.

In an alternate embodiment, components (iv) and (v) and components (x) and (xi) may be replaced with $Al(OR^5)_y R^6_{3-y}$ obtained from any convenient source, where $R^5$ is an alkyl group having 1-20 carbon atoms, $R^6$ is an alkyl group having 1-10 carbon atoms and y is 1 or 2.

The concentration of the components of the solutions used in the preparation of the catalyst is not critical and is primarily governed by practical considerations. The combining of the components is exothermic and the resultant evolution of heat is a factor in determining the upper concentration limits of the solutions. Concentrations up to about 50%, on a weight basis, may however be used. The lower concentration limits are related to practical considerations for example, the amount of solvent required, the equipment being used and the like. Concentrations of as low as 25 ppm, on a weight basis, may be used but higher concentrations, for example 100 ppm and above, are preferred.

It is convenient to admix the solutions of the catalyst components at ambient or lower temperatures i.e. lower than 30°C, and permit reaction to occur for some minimum time. This time depends on the type and reactivity of the components used to prepare a particular catalyst, and examples of such times are given herein.

As exemplified hereinafter, the sequence of steps in the preparation of the catalyst is important in obtaining a catalyst with high activity.

The solvent used in the preparation of the coordination catalyst is an inert hydrocarbon, in particular a hydrocarbon that is inert with respect to the coordination catalyst. Such solvents are known and include for example, hexane, heptane, octane, cyclohexane, methylcyclohexane and hydrogenated naphtha. The solvent used in the preparation of the catalyst is preferably the same as that fed to the reactor for the polymerization process.

The coordination catalyst described herein is used in the process of the present invention without separation of any of the components of the catalyst. In particular, neither liquid nor solid fractions are separated from the catalyst before it is fed to the reactor. In addition, the catalyst and its components are not slurries. All components are easy-to-handle, storage-stable liquids. The catalyst described herein may be used, according to the process of the present invention, over the wide range of temperatures that may be used in an alpha-olefin polymerization process operated under solution conditions. For example such polymerization temperatures may be in the range of 105-320°C and especially include polymerization in the range of 180-310°C and particularly in the range 220-280°C.

The pressures used in the process of the present invention are those known for solution polymerization processes, for example pressures in the range of about 4-20 MPa.

In the process of the present invention, the alpha-olefin monomers are polymerized in the reactor in the presence of the catalyst. Pressure and temperature are controlled so that the polymer formed remains in solution.

Small amounts of hydrogen, for example 1-100 parts per million by weight, based on the total solution fed to the reactor may be added to the feed in order to improve control of the melt index and/or molecular weight distribution and thus aid in the production of a more uniform product, as is disclosed in CA-A-703,704.

The solution passing from the polymerization reactor is normally treated to deactivate any catalyst remaining in the solution. A variety of catalyst deactivators are known, examples of which include fatty acids, alkaline earth metal salts of aliphatic carboxylic acids, alcohols and trialkanolamines, an example of the latter being triisopropanolamine.

The hydrocarbon solvent used for the deactivator is preferably the same as the solvent used in the polymerization process. If a different solvent is used, it must be compatible with the solvent used in the polymerization mixture and not cause adverse effects on the solvent recovery system associated with the polymerization process.

After deactivation of the catalyst, the solution containing polymer may be passed through a bed of activated alumina or bauxite which removes part or all of the deactivated catalyst residues. It is, however, preferred that the process be operated without removal of deactivated catalyst residues. The solvent may then be flashed off from the polymer, which subsequently may be extruded into water and cut into pellets or other suitable comminuted shapes. The heat for efficient flashing of the solvent is normally provided either externally in a heat exchanger or, preferably, from the heat of polymerization, to raise the temperature of the solution passing from the reactor viz. the reactor effluent, sufficiently to facilitate flashing; as noted above, this requires a catalyst capable of functioning at high temperatures. The recovered polymer may then be treated with saturated steam at atmospheric pressure to, for example, reduce the amount of volatile materials and improve polymer colour. The treatment may be carried out for about 1 to 16 hours, following which the polymer may be dried and cooled with a stream of air for 1 to 4 hours. Pigments, antioxidants, UV screeners, hindered amine light stabilizers and other additives may be added to the polymer either before or after the polymer is initially formed into pellets or other comminuted shapes.

The antioxidant incorporated into polymer obtained from the process of the present invention may, in embodiments, be a single antioxidant e.g. a hindered phenolic antioxidant, or a mixture of antioxidants e.g. a hindered phenolic antioxidant combined with a secondary antioxidant e.g. a phosphite. Both types of antioxidant are known in the art. For example, the ratio of phenolic antioxidant to secondary antioxidant may be in the range of 0.1:1 to 5:1 with the total amount being in the range of 200 to 3000 ppm.

The process of the present invention may be used to prepare homopolymers of ethylene and copolymers of ethylene and higher alpha-olefins having densities in the range of, for example, about 0.900-0.970 g/cm$^3$ and especially 0.915-0.965 g/cm$^3$; the polymers of higher density, e.g. about 0.960 and above, being homopolymers. Such polymers may have a melt index, as measured by the method of ASTM D-1238, condition E, in the range of, for example, about 0.1-200, and especially in the range of about 0.1-120 dg/min. The polymers may be manufactured with narrow or broad molecular weight distribution. For example, the polymers may have a stress exponent, a measure of molecular weight distribution, in the range of about 1.1-2.5 and especially in the range of about 1.3-2.0.

Stress exponent is determined by measuring the throughput of a melt indexer at two stresses (2160g and 6480g loading) using the procedures of the ASTM melt index test method, and the following formula:

$$\text{Stress exponent} = \frac{1}{0.477}\log\frac{(\text{wt.extruded with 6480 wt.})}{(\text{wt.extruded with 2160g wt.})}$$

Stress exponent values of less than about 1.40 indicate narrow molecular weight distribution while values above about 1.70 indicate broad molecular weight distribution.

The polymers produced by the process of the present invention are capable of being fabricated into a wide variety of articles, as is known for homopolymers of ethylene and copolymers of ethylene and higher alpha-olefins.

Unless otherwise noted, in the examples hereinafter the following procedures were used:

The reactor was a 81 mL free-volume (regular internal shape, with the approximate dimensions of 15 x 90 mm) pressure vessel fitted with six regularly spaced internal baffles. The vessel was fitted with a six blade turbine type impeller, a heating jacket, pressure and temperature controllers, three feed lines and a single outlet. The feed lines were located on the top of the vessel, each at a radial distance of 40 mm from the axis, while the outlet line was axial with the agitator drive shaft. The catalyst precursors and other reagents were prepared as solutions in cyclohexane which had been purified by passage through beds of activated alumina, molecular sieves and silica gel prior to being stripped with nitrogen.

Ethylene was metered into the reactor as a cyclohexane solution prepared by dissolving purified gaseous ethylene in purified solvent. The feed rates of the catalyst components were adjusted to produce the desired conditions in the reactor. The desired hold-up times in the catalyst lines were achieved by adjusting the length of the tubing through which the components were passed. The hold-up time in the reactor was held constant by adjusting the solvent flow to the reactor such that the total flow remained constant. The reactor pressure was maintained at 7.5 MPa and the temperature and flows were held constant during each experiment.

The initial (no conversion) monomer concentration in the reactor was 3-4 wt%. A solution of deactivator viz. triisopropanolamine or nonanoic acid, in toluene or cyclohexane was injected into the reactor effluent at the reactor outlet line. The pressure of the stream was then reduced to about 110 kPa (Abs.) and the unreacted monomer was continuously stripped off with nitrogen. The amount of unreacted monomer was monitored by gas chromatography. The catalyst activity was defined as

$$Kp = (Q/(1-Q))(1/HUT)(1/\text{catalyst concentration})$$

Where Q is the fraction of ethylene (monomer) converted, HUT is the reactor hold-up time expressed in minutes and the catalyst concentration is the concentration in the reaction vessel expressed in mmol/l. The catalyst concentration is based on the sum of the transition metals. The polymerization activity (Kp) was calculated.

The present invention is illustrated by the following examples. Unless noted to the contrary, in each example the solvent used was cyclohexane, the monomer was ethylene and the reactor hold-up time was held constant at 3.0 min. Temperatures are in °C.

Example 1

The catalyst was prepared by the in-line mixing at ambient temperature (approximately 30°C) of solutions of each of dibutyl magnesium, triethyl aluminum, tert butylchloride and titanium tetrachloride in cyclohexane, followed by the addition of further solution of triethyl aluminum in cyclohexane. The concentrations and flows of each species were adjusted such that the following mole ratios were obtained:

chlorine (from tert butyl chloride)/magnesium = 2.4; magnesium/titanium = 5.0;

aluminum (first triethyl aluminum)/titanium = 0.9;

aluminum (second triethyl aluminum)/titanium = 3.0.

The reactor polymerization was operated at a temperature of 230°C, as measured in the reactor. The solution passing from the reactor was deactivated and the polymer recovered, as described above. Catalyst activity (Kp) was calculated and the results obtained are shown in Table 1. The ratios reported for Cl/Mg is the optimized ratio required in order to obtain maximum catalyst activity at the indicated ratio of Mg/Ti.

In Runs 2-7, the catalyst preparation was as above with the exception that one mole equivalent of alcohol was added to the second aliquot of triethyl aluminum (thus forming the alkoxide).

TABLE I

| | | RATIOS | | | | | |
|---|---|---|---|---|---|---|---|
| Run No. | Cl/Mg | Mg/Ti | Al[1]/Ti | Al[2]/Ti | Alcohol | Temp | Kp |
| 1 | 2.4 | 5.0 | 0.9 | 3.0 | none | 230 | 13.9 |
| 2 | 2.2 | 5.0 | 0.9 | 6.0 | t-butanol | 230 | 31.7 |
| 3 | 2.4 | 5.0 | 0.9 | 3.0 | t-butanol | 230 | 4.8 |
| 4 | 2.3 | 5.0 | 0.9 | 3.0 | phenol | 230 | 30.4 |
| 5 | 2.2 | 5.0 | 0.9 | 3.0 | ethanol | 230 | 24.9 |
| 6 | 2.3 | 5.0 | 0.9 | 4.5 | n-decanol | 230 | 24.1 |
| 7 | 2.2 | 5.0 | 0.9 | 3.0 | neopentyl alcohol | 230 | 29.3 |
| 8 | 2.3 | 5.0 | 0.9 | 6.0 | t-butanol[3] | 230 | 2.7 |

Note:

[1] ratio of triethyl aluminum to titanium at first addition.

[2] ratio of triethyl aluminum or alkoxydiethyl aluminum to titanium at second addition.

Kp calculated polymerization rate constant. 1/mmol/ruin.

[3] t-butanol added to the reactor rather than to the catalyst.

Run 1 is a comparative run in which an alkoxide component was not present. Runs 1, 2 and 3 illustrate that the ratios of the catalyst components for the alkoxide systems have significant effects on the increase in activity, which is expected to vary with the type and composition of the other catalyst components and the mode of operation of the process but nonetheless illustrates that increases in catalytic activity of greater than a factor of two are obtainable.

Runs 4, 5, 6 and 7 illustrate the use of alcohols other than tert butanol.

Run 8 illustrates the detrimental effect of the addition of the alcohol directly to the reactor, rather than to the second triethyl aluminum stream.

Example II

Catalyst was prepared Using the method described in Example I, except that the triethyl aluminum at the second addition point was spiked with tert. butyl alcohol, thus forming mixtures of triethyl aluminum and tert. butoxy diethyl aluminum. Further details and the results obtained were as follows:

TABLE II

| Run No. | Cl/Mg | RATIOS Mg/Ti | Al[1]/Ti | Al[2]/Ti | Alc./Al[2] | Temp | Kp |
|---|---|---|---|---|---|---|---|
| 9 | 2.2 | 5.0 | 0.9 | 6.0 | 0.0 | 230 | 5.2 |
| 10 | 2.2 | 5.0 | 0.9 | 6.0 | 0.2 | 230 | 6.7 |
| 11 | 2.2 | 5.0 | 0.9 | 6.0 | 0.4 | 230 | 9.6 |
| 12 | 2.2 | 5.0 | 0.9 | 6.0 | 0.6 | 230 | 13.7 |
| 13 | 2.2 | 5.0 | 0.9 | 6.0 | 0.8 | 230 | 19.7 |
| 14 | 2.2 | 5.0 | 0.9 | 6.0 | 1.0 | 230 | 31.7 |

Note:

[1] ratio of triethyl aluminum to titanium at first addition.

[2] ratio of triethyl aluminum or alkoxydiethyl aluminum to titanium at second addition.

Kp        calculated polymerization rate constant. 1/mmol/min.

Alc./Al$^2$        ratio of tert.butanol to Al$^2$

At the high temperature used, increasing the proportion of alkoxydialkyl aluminum relative to trialkyl aluminum resulted in an increase in the activity of the catalyst.

<u>Example III</u>

The procedure of Example I was repeated, using a variety of temperatures of the reactor. Some optimization of catalyst ratios was undertaken, which is reflected in the difference in the ratios between Runs 18 and 19 below.

The results obtained were as follows:

TABLE III

| | RATIO | | | | | | |
|---|---|---|---|---|---|---|---|
| Run No. | Cl/Mg | Mg/Ti | Al$^1$/Ti | Al$^2$/Ti | Activator | Temp | Kp |
| 15 | 2.3 | 5.0 | 0.9 | 6.0 | BUODEAL | 200 | 94 |
| 16 | 2.2 | 5.0 | 0.9 | 6.0 | BUODEAL | 230 | 32 |
| 17 | 2.3 | 5.0 | 0.9 | 6.0 | BUODEAL | 260 | 7 |
| 18 | 2.2 | 5.0 | 0.9 | 1.5 | NEODEAL | 200 | 153 |
| 19 | 2.2 | 5.0 | 0.9 | 3.0 | NEODEAL | 230 | 29 |
| 20 | 2.2 | 5.0 | 0.9 | 1.5 | NEODEAL | 260 | 8 |

Note:

[1] ratio of triethyl aluminum to titanium at first addition.

[2] ratio of triethyl aluminum or alkoxydiethyl aluminum to titanium at second addition.

Kp calculated polymerization rate constant. 1/mmol/min.

BUODEAL tert. butoxy diethyl aluminum NEODEAL neopentoxy diethyl aluminum

This example illustrates that the activators described herein are sensitive to temperature, exhibiting a decrease in activity with increasing temperature.

**Claims**

1. A solution process for the preparation of high molecular weight polymers of alpha-olefins selected from the group consisting of homopolymers of ethylene and copolymers of ethylene and $C_3$-$C_{12}$ higher alpha-olefins, said process comprising feeding monomer selected from the group consisting of ethylene and mixtures of ethylene and at least one $C_3$-$C_{12}$ higher alpha-olefin, a coordination catalyst and inert hydrocarbon solvent to a reactor, polymerizing said monomer at a temperature in the range of 105-320°C and recovering the polymer so obtained, characterized in that said coordination catalyst is formed using Procedure A or Procedure B by in-line mixing of components (i)-(v), as follows:

    (i) a mixture of $MgR^1{}_2$ and $AlR^2{}_3$ in which each $R^1$ and $R^2$ are the same or different and are independently selected from alkyl groups having 1-10 carbon atoms;

    (ii) a reactive chloride component;

    (iii) a titanium compound selected from titanium tetrachloride and titanium tetrabromide;

    (iv) $AlR^3{}_3$ in which each $R^3$ is an alkyl group having 1-10 carbon atoms; and

    (v) an alcohol;

in which: Procedure A comprises admixing components (i) and (ii) and subsequently admixing the resultant composition with (iii) to form a first catalyst component, separately admixing component (iv) with component (v) to form a second catalyst component, and after a period of 30-500 seconds combining the first and second catalyst components; Procedure B comprises admixing components (ii) and (iii) and adding component (i) to the resultant mixture to form a first catalyst component, and separately admixing component (iv) with component (v) to form a

EP 0 606 289 B1

second catalyst component, and subsequently admixing the first and second components; or by Procedure C using components (vi)-(xi), as follows:

(vi) $MgR^1_2$ as defined above:

(vii) a reactive chloride compound

(viii) $AlR^4_zCl_{3-z}$ in which each $R^4$ is an alkyl group having 1-10 carbon atoms and z is 0-3;

(ix) a titanium compound as defined above;

(x) an alcohol; and

(xi) $AlR^2_3$ as defined above;

in which Procedure C comprises admixing component (vi) with a mixture formed from components (vii) and (viii), admixing component (ix) with the resultant admixture to form a first catalyst component, separately admixing component (x) and component (xi) to form a second catalyst component and then combining the first and second catalyst components;

the forming of the first and second catalyst components and the admixing thereof being carried out in-line with the proviso that components (iv) and (v) or components (x) and (xi) may be replaced by $Al(OR^5)_yR^6_{3-y}$ wherein $R^5$ is an alkyl group having 1-20 carbon atoms, $R^6$ is an alkyl group having 1-10 carbon atoms, and y is 1 or 2,

said coordination catalyst having an atomic ratio of Mg:Al in the range of 1:0.05 to 1:0.4 in the first component, a ratio of Mg:Ti in the range of 2:1 to 50:1, a ratio of Al in component (iv) or (xi) to Ti in the range 0.5:1 to 10:1, a ratio of Al in component (iv) or (xi) to alcohol in component (v) or (x) in the range of 1:0.05 to 1:1.5, and a ratio of (chloride in component (ii) or (vii) plus 0.25 times chloride or bromide component (iii) or (ix)) to Mg in the range of 1:1 to 3:1; the forming of the first and second catalyst components and the admixing thereof being carried out in-line at a temperature of less than 30°C.

2. The process of claim 1 in which any alkyl group is selected from the group consisting of methyl, ethyl, propyl, butyl or iso-butyl.

3. The process of claim 1 in which the alcohol is an aliphatic alcohol having from 1-20 carbon atoms.

4. The process of claim 3 in which the alcohol has 1-16 carbon atoms.

5. The process of Claim 1 in which the reactive chloride is HCl, t-butyl chloride or benzyl chloride.

6. The process of Claim 1 in which in component (iii), the titanium compound is titanium tetrachloride.

7. The process of any one of Claims 1-6 in which the catalyst is prepared by Procedure A.

8. The process of any one of Claims 1-6 in which the catalyst is prepared by Procedure B.

9. The process of any one of Claims 1-6 in which the catalyst is prepared by Procedure C.

10. The process of Claim 7 or Claim 8 in which: the atomic ratio of Mg:Al in the first component is in the range of 1:0.1 to 1:0.4; the ratio of Mg:Ti is in the range of 4:1 to 8:1; the ratio of Al in component (iv) to Ti is in the range 1:1 to 7:1; the ratio of Al in component (iv) to alcohol in component (v) is about 1:1; and a ratio of (chloride in component (ii) plus 0.25 times chloride or bromide in component (iii)) to Mg in the range of 1.8:1 to 2.8:1.

11. The process of Claim 9 in which: the atomic ratio of Mg:Al in the first component is in the range of 1:0.1 to 1:0.4; the ratio of Mg:Ti is in the range of 4:1 to 8:1; the ratio of Al in component (xi) to Ti is in the range 1:1 to 7:1; the ratio of Al in component (xi) to alcohol in component (x) is about 1:1; and a ratio of (chloride in component (vii) plus 0.25 times chloride or bromide in component (ix)) to Mg in the range of 1.8:1 to 2.8:1.

12. The process of any one of Claims 1-11 in which the coordination catalyst is used without separation of any components thereof.

**Patentansprüche**

1. Lösungsverfahren zur Herstellung hochmolekularer Polymere von $\alpha$-Olefinen, ausgewählt aus der aus Homopolymeren von Ethylen und Copolymeren von Ethylen mit höheren $C_3$-$C_{12}$-$\alpha$-Olefinen bestehenden Gruppe, wobei das Verfahren das Einspeisen von Monomer, ausgewählt aus der aus Ethylen und Gemischen von Ethylen mit zumindest einem höheren $C_3$-$C_{12}$-$\alpha$-Olefin bestehenden Gruppe, eines Koordinationskatalysators und eines inerten Kohlenwasserstoff-Lösungsmittels in einen Reaktor, das Polymerisieren des Monomers bei einer Temperatur im Bereich von 105-320°C und das Gewinnen des so erhaltenen Polymers umfaßt, dadurch gekennzeichnet, daß der Koordinationskatalysator nach Vorgangsweise A oder Vorgangsweise B durch in-line-Mischen nachstehender Komponenten (i)-(v) gebildet wird:

(i) ein Gemisch von $MgR^1{}_2$ und $AlR^2{}_3$, worin jedes $R^1$ und $R^2$ gleich oder unterschiedlich und unabhängig voneinander aus Alkylgruppen mit 1-10 Kohlenstoffatomen ausgewählt sind;
(ii) eine reaktive Chloridkomponente;
(iii) eine Titanverbindung, ausgewählt aus Titantetrachlorid und Titantetrabromid;
(iv) $AlR^3{}_3$, worin jedes $R^3$ eine Alkylgruppe mit 1-10 Kohlenstoffatomen ist; und
(v) ein Alkohol;

wobei Vorgangsweise A folgendes umfaßt: Vermischen der Komponenten (i) und (ii) und anschließendes Vermischen der resultierenden Zusammensetzung mit (iii), um eine erste Katalysatorkomponente zu erhalten, getrenntes Vermischen von Komponente (iv) mit Komponente (v), um eine zweite Katalysatorkomponente zu erhalten, und Kombinieren der ersten und zweiten Katalysatorkomponente nach einer Zeitspanne von 30-500 Sekunden;
wobei Vorgangsweise B folgendes umfaßt: Vermischen der Komponenten (ii) und (iii) und Zusetzen von Komponente (i) zum resultierenden Gemisch, um eine erste Katalysatorkomponente zu erhalten, und getrenntes Vermischen von Komponente (iv) mit Komponente (v), um eine zweite Katalysatorkomponente zu erhalten, sowie anschließendes Vermischen der ersten und zweiten Komponente;
oder daß der Katalysator gemäß Vorgangsweise C unter Verwendung von nachstehenden Komponenten (vi)-(xi) gebildet wird:

(vi) $MgR^1{}_2$ wie oben definiert;

(vii) eine reaktive Chloridverbindung;

(viii) $AlR^4{}_z C1_{3-z}$, worin jedes $R^4$ eine Alkylgruppe mit 1-10 Kohlenstoffatomen ist und $z = 0$-3 ist;

(ix) eine Titanverbindung wie oben definiert;

(x) ein Alkohol; und

(xi) $AlR^2{}_3$ wie oben definiert;

wobei Vorgangsweise C folgendes umfaßt: Vermischen von Komponente (vi) mit einem Gemisch der Komponenten (vii) und (viii), Vermischen von Komponente (ix) mit dem resultierenden Gemisch, um eine erste Katalysatorkomponente zu erhalten, getrenntes Vermischen von Komponente (x) und Komponente (xi), um eine zweite Katalysatorkomponente zu erhalten, sowie anschließendes Zusammenbringen der ersten und zweiten Katalysatorkomponente;
wobei die Bildung der ersten und zweiten Katalysatorkomponente und deren Vermischen in-line und mit der Maßgabe durchgeführt werden, daß die Komponenten (iv) und (v) oder die Komponenten (x) und (xi) durch $Al(OR^5)_y,R^6{}_{3-y}$ ersetzt werden können, worin $R^5$ eine Alkylgruppep mit 1-20 Kohlenstoffatomen ist, $R^6$ eine Alkylgruppe mit 1-10 Kohlenstoffatomen ist und $y = 1$ oder 2 ist,
wobei der Koordinationskatalysator ein Atomverhältnis von Mg:Al in der ersten Komponente im Bereich von 1:0,05 bis 1:0,4, ein Verhältnis von Mg:Ti im Bereich von 2:1 bis 50:1, ein Verhältnis von Al in Komponente (iv) oder (xi) zu Titan im Bereich von 0,5:1 bis 10:1, ein Verhältnis von Al in Komponente (iv) oder (xi) zum Alkohol in Komponente (v) oder (x) im Bereich von 1:0,05 bis 1:1,5 und ein Verhältnis von (Chlorid in Komponente (ii) oder (vii) plus das 0,25fache des Chlorids oder Bromids in Komponente (iii) oder (ix)) zu Mg im Bereich von 1:1 bis 3:1 aufweist,
wobei die Bildung der ersten und zweiten Katalysatorkomponente und deren Vermischen in-line bei einer Temperatur von weniger als 30°C erfolgen.

2. Verfahren nach Anspruch 1, worin jede Alkylgruppe aus der aus Methyl, Ethyl, Propyl, Butyl oder Isobutyl bestehenden Gruppe ausgewählt ist.

**3.** Verfahren nach Anspruch 1, worin der Alkohol ein aliphatischer Alkohol mit 1-20 Kohlenstoffatomen ist.

**4.** Verfahren nach Anspruch 3, worin der Alkohol 1-16 Kohlenstoffatome besitzt.

**5.** Verfahren nach Anspruch 1, worin das reaktive Chlorid HCl, t-Butylchlorid oder Benzylchlorid ist.

**6.** Verfahren nach Anspruch 1, worin in Komponente (iii) die Titanverbindung Titantetrachlorid ist.

**7.** Verfahren nach einem der Ansprüche 1 bis 6, worin der Katalysator gemäß Vorgangsweise A gebildet wird.

**8.** Verfahren nach einem der Ansprüche 1 bis 6, worin der Katalysator gemäß Vorgangsweise B gebildet wird.

**9.** Verfahren nach einem der Ansprüche 1 bis 6, worin der Katalysator gemäß Vorgangsweise C gebildet wird.

**10.** Verfahren nach Anspruch 7 oder 8, worin: das Atomverhältnis von Mg:Al in der ersten Komponente im Bereich von 1:0,1 bis 1:0,4 liegt; das Verhältnis von Mg:Ti im Bereich von 4:1 bis 8:1 liegt; das Verhältnis von Al in Komponente (iv) zu Ti im Bereich von 1:1 bis 7:1 liegt; das Verhältnis von Al in Komponente (iv) zum Alkohol in Komponente (v) etwa 1:1 beträgt; und das Verhältnis von (Chlorid in Komponente (ii) plus das 0,25fache des Chlorids oder Bromids in Komponente (iii)) zu Mg im Bereich von 1,8:1 bis 2,8:1 liegt.

**11.** Verfahren nach Anspruch 9, worin: das Atomverhältnis von Mg:Al in der ersten Komponente im Bereich von 1:0,1 bis 1:0,4 liegt; das Verhältnis von Mg:Ti im Bereich von 4:1 bis 8:1 liegt; das Verhältnis von Al in Komponente (xi) zu Ti im Bereich von 1:1 bis 7:1 liegt; das Verhältnis von Al in Komponente (xi) zum Alkohol in Komponente (x) etwa 1:1 beträgt; und das Verhältnis von (Chlorid in Komponente (vii) plus das 0,25fache des Chlorids oder Bromids in Komponente (ix)) zu Mg im Bereich von 1,8:1 bis 2,8:1 liegt.

**12.** Verfahren nach einem der Ansprüche 1 bis 11, worin der Koordinationskatalysator ohne Abtrennung jeglicher seiner Komponenten eingesetzt wird.

**Revendications**

**1.** Procédé en solution pour la préparation de polymères de fort poids moléculaire d'alpha-oléfines sélectionnées dans le groupe consistant en homopolymères d'éthylène et copolymères d'éthylène et d'alpha-oléfines supérieures $C_3$-$C_{12}$, ledit procédé comprenant la fourniture d'un monomère sélectionné dans le groupe consistant en éthylène et mélanges d'éthylène et d'au moins une alpha-oléfine supérieure $C_3$-$C_{12}$, un catalyseur de coordination et un hydrocarbure solvant inerte dans un réacteur, la polymérisation dudit monomère à une température entre 105 et 320°C et la récupération du polymère ainsi obtenu, caractérisé en ce que ledit catalyseur de coordination est formé en utilisant le Processus A ou le Processus B par mélange en ligne de composants (i)-(v), comme suit : (i) un mélange de $MgR^1_2$ et $AlR^2_3$ où chacun de $R^1$ et $R^2$ est identique ou différent et ils sont indépendamment sélectionnés parmi des groupes alkyles ayant 1 à 10 atomes de carbone;

(ii) un composant de chlorure réactif;

(iii) un composé de titane sélectionné parmi le tétrachlorure de titane et le tétrabromure de titane;

(iv) $AlR^3_3$ où chaque $R^3$ est un groupe alkyle ayant 1-10 atomes de carbone; et

(v) un alcool;

dans lequel : le Processus A consiste à mélanger les composants (i) et (ii) et à mélanger subséquemment la composition résultante avec (iii) pour former un premier composant de catalyseur, à mélanger séparément le composant (iv) avec le composant (v) pour former un second composant de catalyseur et, après une période de 30-500 secondes, à combiner les premier et second composants de catalyseur; le Processus B consiste à mélanger les composants (ii) et (iii) et à ajouter les composants (i) au mélange résultant pour former un premier composant de catalyseur, et à mélanger séparément le composant (iv) avec le composant (v) pour former un second composant de catalyseur, et à mélanger subséquemment les premier et second composants ;
ou par le Processus C utilisant des composants (vi)-(xi), comme suit :

(vi) $MgR^1_2$ tel que défini ci-dessus :

(vii) un composé de chlorure réactif;

(viii) $AlR^4_zCl_{3-z}$ où chaque $R^4$ est un groupe alkyle ayant 1-10 atomes de carbone et z est 0-3;

(ix) un composé de titane tel que défini ci-dessus;

(x) un alcool; et

(xi) $AlR^2_3$ tel que défini ci-dessus;

où le Processus C consiste à mélanger le composant (vi) avec un mélange formé des composants (vii) et (viii), à mélanger le composant (ix) avec le mélange résultant pour former un premier composant de catalyseur, à mélanger séparément le composant (x) et le composant (xi) pour former un second composant de catalyseur et puis à combiner les premier et second composants de catalyseur;
la formation des premier et second composants de catalyseur et leur mélange étant effectués en ligne à condition que les composants (iv) et (v) ou les composants (x) et (xi) puissent être remplacés par $Al(OR^5)_yR^6_{3-y}$ où $R^5$ est un groupe alkyle ayant 1-20 atomes de carbone, $R^6$ est un groupe alkyle ayant 1-10 atomes de carbone et y est 1 ou 2, ledit catalyseur de coordination ayant un rapport atomique de Mg:Al compris entre 1:0,05 et 1:0,4 dans le premier composant, un rapport de Mg:Ti compris entre 2:1 et 50:1, un rapport de Al dans le composant (iv) ou (xi) à Ti compris entre 0,5:1 et 10:1, un rapport de Al dans le composant (iv) ou (xi) à l'alcool dans le composant (v) ou (x) compris entre 1:0,05 et 1:1,5, et un rapport du (chlorure dans le composant (ii) ou (vii) plus 0,25 fois le chlorure ou bromure dans le composant (iii) ou (ix)) à Mg compris entre 1:1 et 3:1; la formation des premier et second composants de catalyseur et leur mélange étant effectués en ligne à une température de moins de 30°C.

2. Procédé de la revendication 1 dans lequel tout groupe alkyle est sélectionné dans le groupe consistant en méthyle, éthyle, propyle, butyle ou iso-butyle.

3. Procédé de la revendication 1 dans lequel l'alcool est un groupe aliphatique ayant 1-20 atomes de carbone.

4. Procédé de la revendication 3 dans lequel l'alcool a 1-16 atomes de carbone.

5. Procédé de la revendication 1 dans lequel le chlorure réactif est HCl, du chlorure de t-butyle ou du chlorure de benzyle.

6. Procédé de la revendication 1 dans lequel dans le composant (iii), le composé de titane est le tétrachlorure de titane.

7. Procédé selon l'une quelconque des revendications 1-6 dans lequel le catalyseur est préparé par le Processus A.

8. Procédé selon l'une quelconque des revendications 1-6 dans lequel le catalyseur est préparé par le Processus B.

9. Procédé selon l'une quelconque des revendications 1-6 dans lequel le catalyseur est préparé par le Processus C.

10. Procédé de la revendication 7 ou de la revendication 8 dans lequel : le rapport atomique de Mg:Al dans le premier composant est compris entre 1:0 et 1:0,4; le rapport de Mg:Ti est compris entre 4:1 et 8:1; le rapport de Al dans le composant (iv) à Ti est compris entre 1:1 et 7:1; le rapport de Al dans le composant (iv) à l'alcool dans le composant (v) est d'environ 1:1; et un rapport du (chlorure dans le composant (ii) plus 0,25 fois le chlorure ou bromure dans le composant (iii) à Mg est compris entre 1,8:1 et 2,8:1.

11. Procédé de la revendication 9 dans lequel : le rapport atomique de Mg:Al dans le premier composant est compris entre 1:0,1 et 1:0,4; le rapport de Mg:Ti est compris entre 4:1 et 8:1; le rapport de Al dans le composant (xi) à Ti est compris entre 1:1 et 7:1; le rapport de Al dans le composant (xi) à l'alcool dans le composant (x) est d'environ 1:1; et un rapport de (chlorure dans le composant (vii) plus 0,25 fois le chlorure ou le bromure dans le composant (ix)) à Mg est compris entre 1,8:1 et 2,8:1.

12. Procédé selon l'une quelconque des revendications 1-11 où le catalyseur de coordination est utilisé sans séparation

de ses composants.